# EUROPÄISCHE PATENTSCHRIFT

(11) **EP 0 233 626 B1**
(45) Veröffentlichungstag und Bekanntmachung des Hinweises auf die Patenterteilung: **20.04.1994**
(21) Anmeldenummer: 87102180.4
(22) Anmeldetag: 16.02.1987
(51) Int. Cl.: H04N 7/04

(54) **Verfahren zum Demodulieren von D2-MAC-Signalen oder ähnlichen Zeitmultiplex-FM-Signalen und Anordnungen zum Durchführen dieses Verfahrens**
Method for demodulating D2-MAC signals or similar time division multiplexed frequency modulated signals and device for implementing the same
Procédé pour démoduler des signaux D2-MAC ou des signaux multiplexés à division de temps modulés en fréquence similaires et dispositifs pour la mise en oeuvre de ce procédé

(30) Priorität: 18.02.1986 DE 3605048
(43) Veröffentlichungstag der Anmeldung: 26.08.1987
(73) Patentinhaber: ANT Nachrichtentechnik GmbH, D-71522 Backnang (DE)
(72) Erfinder: Drinda, Klaus, Dipl.-Ing., D-7150 Backnang (DE)

(56) Entgegenhaltungen:
- EP-A- 0 162 514
- EP-A- 0 169 093
- RUNDFUNKTECHN. MITTEILUNGEN, Band 29, Nr. 5, 19. August 1985, Seiten 229-246;C. DOSCH: "D- UND D2-MAC/PAKET - Die Mitglieder der MAC-Fernsehstandardfamilie mit geschlossener Basisbanddarstellung"
- IBA, EXPERIMENTAL & DEVELOPMENT REPORT 130/84, Juli 1985, Seiten 1-22, Winchester, GB; B. BEECH et al.: "Threshold extension techniques"
- SESSION XVII - HD AND ENHANCED TV, 6. Juni 1986, Seiten 250-251, IEEE, Freiburg, DE; H. ZIBOLD et al.: "D2MAC - A new feature for digital tv"

## Beschreibung

Die Erfindung geht aus von einem Verfahren gemäß dem Oberbegriff des Patentanspruchs 1. Eine Anordnung, der ein solches Verfahren zugrunde liegt, ist aus EP-A-01 69 093 bekannt.

Aus "Rundfunktechnische Mitteilungen", Jahrgang 29 (1985), Heft 5, Seiten 229 bis 246, ist es bekannt FM-modulierte Signale, deren eingenommene HF-Bandbreiten sich periodisch, entsprechend dem modulierenden Basisband-Zeitmultiplexsignal, ändern, insbesondere D2-Signale, bei der Demodulation in der ZF-Bandreite an das Übertragungssignal anzupassen, um eine Verbesserung der Bitfehlerrate zu erreichen. Das Umschaltkriterium ist dort der hochfrequente Störabstand. Übersteigt die Rauschleistung im demodulierten Basisbandsignal einen bestimmten Wert, der z.B. 10 dB C/N entspricht, so wird die Bandbreite des ZF-Filters für das gesamte Signal reduziert. Diese Art der Umschaltung führt zu Verzerrungen Videosignals.
Aus Radio Fernsehen Elektronik, 33., 1984, S. 663 bis 666, ist es bekannt, zur Demodulation von FM-Signalen einen Phase-Lock-Demodulator zu verwenden, der zusätzlich in Abhängigkeit vom Modulationshub geregelt wird. Damit ist eine Qualitätsverbesserung bezüglich des Rauschverhaltens erzielbar. Diese Anordnung ist jedoch nicht zur Demodulation von D2-MAC- oder ähnlichen Signalen verwendbar.

Bei der Anordnung gemäß EP-A-01 69 093 wird eine Änderung der Empfangsbandbreite zwischen zwei Werten vorgenommen, wobei der erste Wert für die analoge Signalkomponente und der zweite Wert für die digitale Signalkomponente optimal ist. Die Empfangsbandbreite ist in Abhängigkeit des gemessenen Signal/Rauschverhältnisses für das zu demodulierende Signal unterhalb einer vorgegebenen Schwelle reduzierbar. Ein adaptives Eingangsfilter ist zu vorgenannten Zwecken in der Bandbreite verstellbar.

Aufgabe der Erfindung ist es, das Verfahren gemäß dem Oberbegriff des Patentanspruches 1 so auszubilden, daß wenig Verzerrungen auftreten. Außerdem sollen Anordnungen zum Durchführen des Verfahrens aufgezeigt werden.

Diese Aufgabe wird bezüglich des Verfahrens durch die kennzeichnenden Merkmale des Patentanspruchs 1 und bezüglich der Anordnungen durch die kennzeichnenden Merkmale der Patentansprüche 7, 8 und 9 gelöst. Die weiteren Ansprüche beinhalten Weiterbildungen des Verfahrens bzw. der Anordnungen.

Die Erfindung führt zu einer Vereinfachung der FM-Demodulation bei Eingangssignalen unterschiedlicher HF-Bandbreite oder ZF-Bandbreite verursacht durch ein Basisband-Zeitmultiplexsignal. Auf die Verwendung zweier Demodulatoren unterschiedlicher Bandbreite kann verzichtet werden. Das Verfahren läßt sich ohne großen Zusatzaufwand für verschiedene Arten von Demodulatoren einsetzen, die Maßnahmen zur Verbesserung der Empfangsqualität aufweisen. Einschwingzeiten von ZF(HF)-Filtern beim Umschalten spielen keine Rolle mehr.

Das erfindungsgemäße Verfahren führt zu einer Verbesserung der FM-Schwelle des D2-Anteils im D2-MAC-Signal, ohne den MAC-Signalanteil zu verzerren. Zusätzlich wird die FM-Schwelle für beide Signalanteile bei Verwendung von schwellwertverbessernden Demodulatoren verbessert.

Die Kombination der Verfahrensschritte "Umschalten der Empfangsbandbreite im Takt der Zeitintervalle des D2-MAC-Signals" und "Verringerung der Empfangsbandbreite in Abhängigkeit von C/N" bedeutet eine nochmalige Verbesserung der FM-Schwelle für den MAC-Anteil und in geringerem Maß für den D2-Anteil, insbesondere bei einem C/N-Verhältnis ≦ 8 dB.

Anhand der Zeichnungen wird die Erfindung nun näher erläutert. Es zeigen
- Fig. 1: den prinzipiellen Aufbau eines D2-MAC-Signals,
- Fig. 2: die Multiplexstruktur des D2-MAC-Paket-Signals,
- Fig. 3: den prinzipiellen Aufbau eines Demodulators zum Durchführen des Verfahrens,
- Fig. 4: eine Schaltung zur Aufbereitung der Umschaltimpulse,
- Fig. 5: den zeitlichen Verlauf der Synchron-, Klemm- und Taktimpulse,
- Fig. 6 a und b: Schaltungsanordnungen zur Umschaltung der Eingangsfilterbandbreite,
- Fig. 7: eine Anordnung zur Umschaltung der Loopfilterbandbreite,
- Fig. 8: eine weitere Anordnung zur Umschaltung der Loopfilterbandbreite,
- Fig. 9: eine Anordnung zur Umschaltung der Basisbandverstärkung,
- Fig. 10: die Umschaltung der Loopverstärkung durch ein Pindioden-Dämpfungsglied,
- Fig. 11: die Umschaltung der Loopverstärkung durch einen schaltbaren Spannungsteiler,
- Fig. 12: das Prinzip der Verringerung der Empfangsbandbreite des Demodulator-Eingangsfilters,
- Fig. 13: das Prinzip der Verringerung der Empfangsbandbreite des Demodulator-Eingangsfilters in Verbindung mit einer Verringerung der Schleifenbandbreite des Demodulators und
- Fig. 14: zeigt die HF-Bandbreitenumschaltung in Abhängigkeit von CIN.

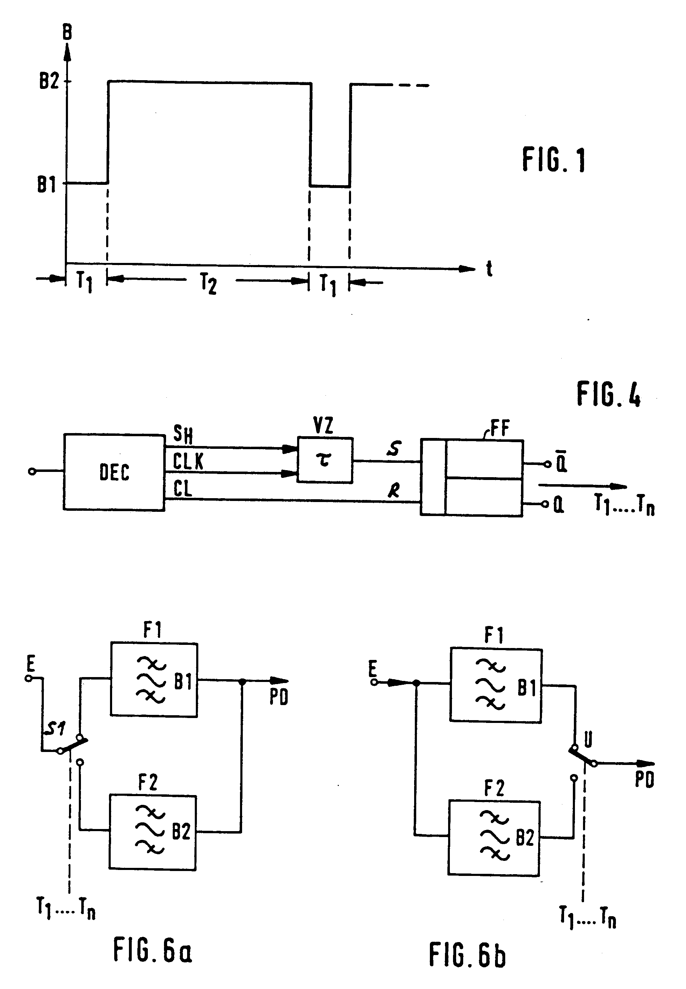

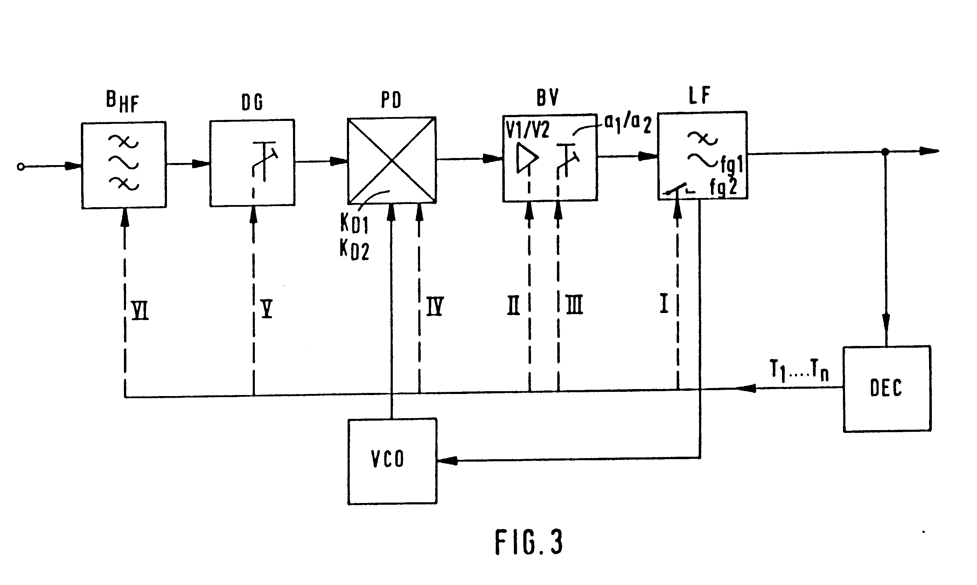

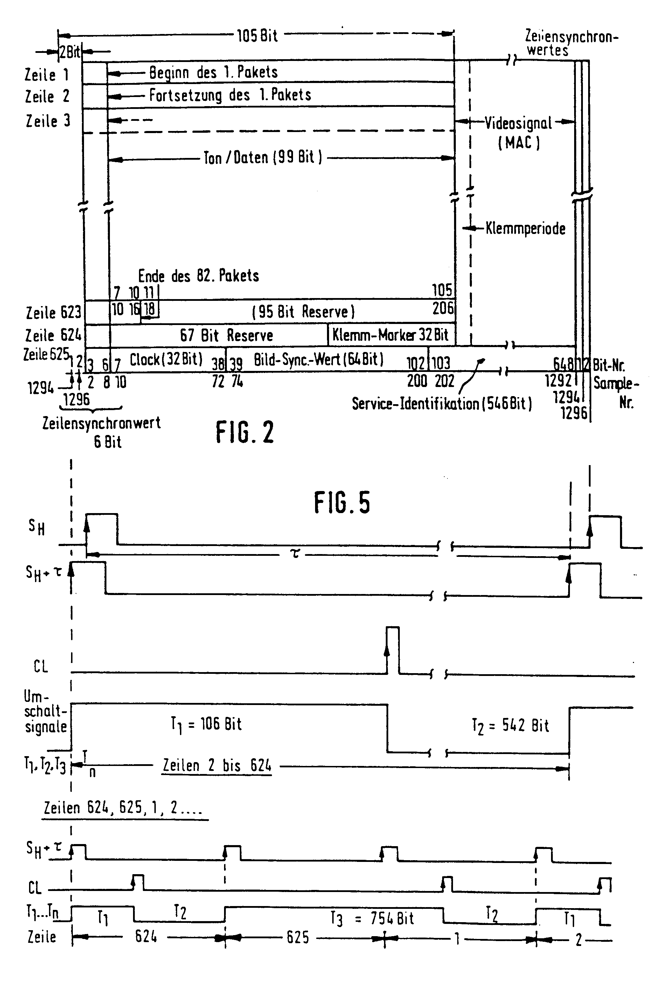

Wie Fig. 1 zeigt, besteht ein D2-MAC/Paket prinzipiell aus einem D2-Signal-paket (Ton, Daten) mit duobinärer Codierung, welches eine Dauer von T1 ≈ 10,5 µs aufweist, und einem MAC-Signal (Videosignal) von einer Dauer von T2 ≈53,5 µs. Das so zusammengesetzte D2-MAC-Signal moduliert dann einen FM-Träger. Während der Dauer T1 verursacht das D2-MAC-Signal eine HF-Bandbreite B1 ≈13 MHz und während der Dauer T2 eine HF-Bandbreite B2 ≈27 MHz. Bei anderen Bandbreiten muß auf den entsprechenden Hub des jeweiligen Systems abgestimmt werden. Die Multiplexstruktur des D2-MAC/Paket-Signals zeigt Fig. 2 in detaillierter Darstellung (vgl. auch Rundfunktechn. Mitteilungen, Jahrgang 29 (1985), Heft 5, Seite 233). In einem Rahmen wird zuerst ein Zeilensynchronwort von 6 Bit übertragen. Daran schließen sich 99 Bits für das Ton-Daten-Paket an. Das Videosignal (MAC) wird durch eine Klemmperiode eingeleitet. Am Ende des MAC-Signals befinden sich Bit1 und 2 des Zeilensynchronwortes. Die Ton-Daten-Pakete werden zeilenweise übergreifend übertragen, so daß das 82. Paket in der Zeile 623 endet und in dieser Zeile noch 95 Reservebits zur Verfügung stehen. Die Zeile 624 beinhaltet bezüglich der Breite des Ton-Daten-Pakets von 99 Bit 67 Reserve-Bits und 32 Klemm-Marker Bits. Die Zeile 625 umfaßt 32 Clock-Bits, 64 Bits für das Bild-Synchronwort und 546 Bits zur Service-Identifikation, wobei die letzere Information auch den für das MAC-Signal reservierten Bereich umfaßt. Die Auswertung dieser Multiplexstruktur für die Umschaltzeiten wird ausführlich im Zusammenhang mit den Figuren 4 und 5 beschrieben.

An Stelle des D2-MAC-Signals kann mit dem Verfahren gemäß der Erfindung auch eine Demodulation von B-MAC modulierten FM-Signalen vorgenommen werden. Bei B-MAC-Signalen muß die Generierung der Umschaltzeiten T1, T2, T3, ... entsprechend angepaßt werden.

Den prinzipiellen Aufbau eines Demodulators zum Durchführen des Verfahrens zeigt Fig. 3. Als Beispiel für einen Demodulator mit Maßnahmen zur Verbesserung der Empfangsqualität ist in dieser Figur ein PLL-FM-Demodulator dargestellt. Dieser PLL-FM-Demodulator besteht aus einem eingangsseitigen Bandfilter B_{HF} für das zu demodulierende HF-Signal. Daran schließt sich ein Dämpfungsglied DG und der Phasendiskriminator PD an. Das Ausgangssignal des Phasendiskriminators wird über den Basisbandverstärker BV und das Loopfilter LF geführt. Das demodulierte Basisbandsignal ist am Ausgang des Loopfilters LF verfügbar. Vom Loopfilter LF wird ein Signal abgenommen zur Steuerung des spannungsgesteuerten Oszillators (VCO) der PLL-Schleife. Das Ausgangssignal des VCO steuert in üblicher Weise den Phasendiskriminator PD. Das demodulierte D2-MAC/Paket-Signal wird einem handelsüblichen D2-Dekoder DEC zugeführt. Ein solcher D2-Dekoder DEC dient zur Dekodierung des D2-Datensignals im D2-MAC-Signal. Er liefert ausgangsseitig unter anderem Zeilensynchronrahmenimpulse S_{H}, Klemmimpulse CL sowie Taktimpulse CLK. Aus diesen Impulsen werden unter Verwendung eines Verzögerungsgliedes VZ und eines R-S-Flip-Flops FF (Fig. 4) Umschaltimpulse T₁ ... Tₙ zur Umschaltung der Schleifenbandbreite der PLL-Schleife im Takt der Zeitintervalle des Zeitmultiplexsignals / Basisband-Zeitintervalle des D2-MAC-Signals abgeleitet. Der zeitliche Verlauf der Impulse S_{H}, CL und CLK, der sich aus der Zeitmultiplexstruktur des D2-MAC-Signals gemäß Fig. 2 ergibt, ist in Fig. 5 dargestellt. Die S_{H}- und CLK-Impulse werden über das Verzögerungsglied VZ mit der Verzögerungszeit τ an den Set-Eingang des Flip-Flops FF geführt. Die CL-Impulse gelangen direkt auf den Reset-Eingang von FF. Die sich am Ausgang des Flip-Flops FF ergebenden Umschaltimpulse T₁, T₂, T₃, ... Tₙ sind ebenfalls in Fig. 5 dargestellt. Die Umschaltimpulse T₁ bis Tₙ werden durch Verknüpfung von S_{H} und CL-Impulsen mittels des Flip-Flops FF erzeugt und bilden Steuersignale, derart, daß durch einen S_{H}-Impuls bei Beginn des D2-Datensignals die Schleifenbandbreite, d.h. die Empfangsbandbreite des Demodulators, reduziert wird und durch einen Klemmimpuls CL am Ende des D2-Signals wieder auf die nichtreduzierte Schleifenbandbreite zurückgeschaltet wird. Das Verzögerungsglied VZ ist so bemessen, daß die Schaltflanke eines S_{H}-Impulses ca. eine Clockperiode von CLK vor dem ersten Bit des D2-Signals (Zeilensynchronwort) liegt. Das Verzögerungsglied VZ kann durch Zählen von n Clockperioden mit T_{CLK} = 49,38 ns realisiert werden. Die Umschaltimpulse T₁ und T₂ haben eine Länge von T₁ = 106 Bit und T₂ = 542 Bit. Für die Zeilen 624, 625, 1, 2 ... wird ein zusätzlicher Umschaltimpuls mit T₃ = 754 Bit erzeugt (Fig. 5, letzte Zeile) als Steuersignal für eine ebenfalls reduzierte Schleifenbandbreite.

Die Umschaltung der Empfangsbandbreite - Schleifenbandbreite des PLL-Demodulators - kann an verschiedenen Stellen vorgenommen werden. Die verschiedenen Möglichkeiten zeigt Fig. 3 durch gestrichelte Wirkungslinien. Eine Möglichkeit - Wirkungslinie I - ist die Umschaltung des Loopfilters LF und zwar während des Auftretens der Umschaltimpulse T₁ bzw. T₃ auf eine Bandbreite entsprechend von B1 ≈ 13 MHz und während des Auftretens von T₂ auf eine Bandbreite entsprechend von B2 ≈ 27 MHz, d.h. B2/B1 ≈ 2. Bei anderen Hüben ergeben sich natürlich andere HF-Bandbreiten. Eine andere Möglichkeit zur Beeinflussung der Schleifenbandbreite - Wirkungslinie II - ist die Umschaltung der Loopverstärkung, beispielsweise durch Schalten der Verstärkung des Basisband-Verstärkers BV in Abhängigkeit der Umschaltsignale T₁,...Tₙ, und damit Veränderung der Basisband-Verstärkung von einem Wert V1 auf einen Wert V2. Falls der Basisbandverstärker BV ein Dämpfungsglied am Ausgang aufweist, kann die Schleifenverstärkung auch durch Umschalten diese Dämpfungsgliedes im Takt von T₁ bis Tₙ - Wirkungslinie III - erfolgen. Eine weitere Möglichkeit zur Umschaltung der Schleifenbandbreite besteht in der Umschaltung der Steilheit des Phasendetektors PD von einem Wert K_{D1} auf einen Wert K_{D2} - Wirkungslinie IV. Falls dem Phasendetektor PD ein Dämpfungsglied DG vorgeschaltet ist, kann auch dieses - Wirkungslinie V - in seiner Dämpfung stufenweise in Abhängigkeit von T₁, ... Tₙ geschaltet werden. Das eingangsseitige Bandfilter B_{HF} kann ebenfalls in seiner Bandbreite in Abhängigkeit von T₁, ... Tₙ geschaltet werden - Wirkungslinie VI. Diese Möglichkeit ist insbesondere sinnvoll bei Verwendung eines herkömmlichen FM-Demodulators ohne FM-Schwellwertverbesserung.

Es ist grundsätzlich möglich, mehr als eine der Wirkungslinien I bis VI gleichzeitig wirksam werden zu lassen. Da der Ort der Verstärkung innerhalb der PLL-Schleife sekundär ist, kann der Basisbandverstärker BV auch anderswo angeordnet sein, beispielsweise zwischen Loopfilter LF und VCO. Bei Verwendung eines VCO mit hoher Steilheit ist gegebenenfalls gar keine Basisbandverstärkung nötigt. Ebenso können Dämpfungsglieder anderswo angeordnet sein oder entfallen.

Wird anstelle eines FM-schwellwertverbessernden PLL-Demodulators ein schwellwertverbessernder FM-Gegenkopplungsdemodulator verwendet, gelten die vorstehenden Betrachtungen sinngemäß. Im Takt der Umschaltsignale T₁, ... Tₙ / Basisband-Zeitintervalle werden dann entsprechend Schleifenverstärkung und/oder Loopfilter umgeschaltet.

Bei Verwendung eines Trackingfilter-Demodulators wird entsprechend die Filterbandbreite und/oder Schleifenverstärkung im Takt von T₁, T₂ ... Tₙ umgeschaltet.

Bei Anwendung des Verfahrens nach der Erfindung verbessert sich die FM-Schwelle für die Bitfehlerrate des D2-Signals um ca. 3 dB bzw. entsprechend 10 log B2/B1 zu niedrigeren C/N-Werten, d.h. das D2-Signal (Ton, Daten) fällt erst nach dem Bildsignal (MAC) aus.

Nachfolgend werden einige Schaltungsrealisierungen vorgestellt zur Umschaltung der Loopfilterbandbreite, Loopverstärkung und Phasendiskriminatorsteilheit. Diese Schaltungsrealisierungen werden für die Verwendung in einem PLL-Demodulator beschrieben. Sie lassen sich jedoch auf die entsprechenden zuvor aufgezeigten Verwendungen leicht übertragen.

Die Umschaltung der Bandbreite des Eingangsfilters B_{HF} zeigt Fig. 6a bzw. 6b.

In Fig. 6a sind die Filtereingänge der beiden Filter F1 mit der Bandbreite B1 und F2 mit der Bandbreite B2 jeweils über den Umschalter S1 mit dem Signaleingang E verbindbar. Die beiden Ausgänge der Filter sind zusammengeschaltet und führen zum Phasendiskriminator PD. Nachteilig ist das Einschwingverhalten des ZF(HF)-Filters bei Umschaltung. Beim Ausführungsbeispiel gemäß Fig. 6b sind beide Filtereingänge mit dem Signaleingang E verbunden. Die Filterausgänge sind jeweils mittels des Umschalters U mit dem Phasendiskriminator PD der PLL-Schleife verbindbar. Sowohl der Umchalter S1 wie auch der Umschalter U wird von den Umschaltsignalen T₁, T₂, ... Tₙ gesteuert. Die Anordnung gemäß Fig. 6b besitzt den Vorteil, daß auf eingeschwungene Filter umgeschaltet werden kann, was bezüglich des Auftretens von Verzerrungen günstiger ist. Die Umschaltung muß unterbrechungsfrei erfolgen. In Abweichung zu den Ausführungsbeispielen gemäß Fig. 6a und b kann auch ein einziges durchstimmbares Filter verwendet werden. Die Durchstimmung der HF-Bandbreite läßt sich vorteilhaft mittels Kapazitätsdioden realisieren, die durch zwei abrufbare Steuerspannungen entsprechend der Umschaltsignale T₁, ... Tₙ für die jeweilige Bandbreite gesteuert werden. Die abrufbaren Steuerspannungen lassen sich an geladenen Kondensatoren abnehmen, die beispielsweise über ein PROM zuschaltbar sind.

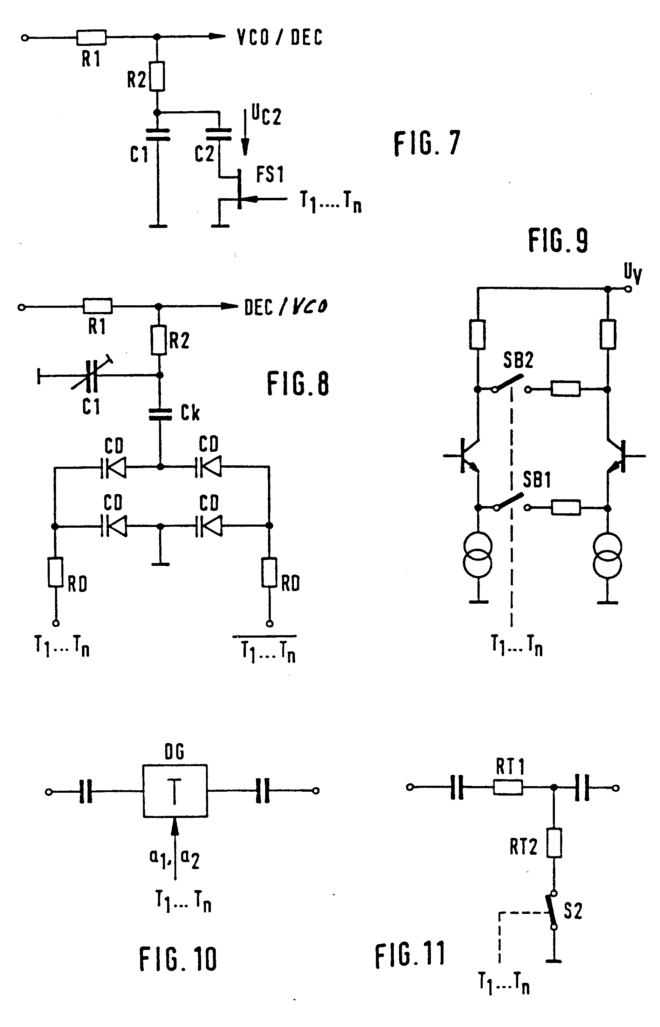

Zur Umschaltung der Loopfilterbandbreite ist die Schaltung gemäß Fig. 7 geeignet. Im Längszweig, d.h. im Schleifenweg, befindet sich der Widerstand R1 und im Querzweig die Serienschaltung aus Widerstand R2 und Kondensator C1. Parallel zum Kondensator C1 befindet sich eine Serienschaltung, gebildet aus Kondensator C2 und Drain-Source-Strecke eines Feldeffekttransistorschalters FS1. Das Gate von FS1 wird durch die Umschaltsignale T₁, T₂, T₃ ... gesteuert. Für den Kondensator C2 muß während T₂ die Spannung U_{C2} gehalten werden, damit beim Einschalten von FS1 keine Fehlerspannung in die Schleife eingespeist wird. Der Vorteil dieser Realisierung besteht darin, daß keine Einschwingvorgänge und keine Spikes auftreten.

Eine andere Möglichkeit zur Umschaltung der Loopfilterbandbreite zeigt Fig. 8. Im Längszweig liegt wieder der Widerstand R1. Im Querzweig liegt die Serienschaltung gebildet aus dem Widerstand R2, einem Koppelkondensator CK sowie einer ersten Brückendiagonale der Brückenschaltung von vier Kapazitätsdioden CD. Der Kondensator C1 ist abstimmbar ausgebildet und liegt parallel zur ersten Brückendiagonale und Koppelkondensator CK. In die Endpunkte der zweiten Brückendiagonale werden jeweils über Widerstände RD die Umschaltsignale T₁ ... Tₙ einmal invertiert und einmal nichtinvertiert eingespeist.

Die Umschaltung der Basisbandverstärkung läßt sich durch eine Anordnung gemäß Fig. 9 realisieren. Als Basisbandverstärker dient hier eine Brücke mit zwei DC-Verstärkern. In der gemeinsamen Emitterleitung der beiden Transistorstufen oder zwischen den Kollektoranschlüssen befindet sich ein durch die Umschaltsignale T₁, ... Tₙ steuerbarer Schalter SB1, bzw. SB2.

Die Loopverstärkung läßt sich auch sehr einfach durch ein schaltbares Pindioden-Dämpfungsglied DG zur Umschaltung der Amplitude des HF-Eingangspegels vor dem Phasendiskriminator PD im Tokt der Umschaltsignale T₁, ... Tₙ verändern (Fig.10). Fig. 11 zeigt eine weitere Möglichkeit zur Umschaltung der Loopverstärkung. Im Längszweig und im Querzweig des Dämpfungsgliedes DG am Eingang des Phasendiskriminators PD (Fig. 3) befindet sich jeweils ein Spannungsteilerwiderstand RT1; RT2. Der Widerstand RT2 ist über den von den Umschaltsignalen T₁, ... Tₙ gesteuerten Schalter S2 mit Masse verbindbar. Für den Schalter S2 eignet sich ein Pindiodenschalter, ein FET oder ein anderer schneller Schalter mit tₒₙ ≦ 50 ns und t_{off} ≦ 750 ns.

Der Phosendiskriminatar PD kann beispielsweise mit einem Dual-Gate-FET aufgebaut sein, wobei sich durch geeignete Gatesteuerung in Abhängigkeit der Umschaltsignale T₁, ... Tₙ die Steilheit umschalten läßt, wobei darauf zu achten ist, daß sich der Arbeitspunkt an der Drain-Elektrode des FET nicht ändert.

Bisher wurde nur die Umschaltung der Empfangsbandbreite im Takt der Zeitintervalle des D2-MAC-Signals vorgestellt. Zur Verbesserung der FM-Schwelle kann die Empfangsbandbreite zusätzlich in Abhängigkeit des CIN-Verhältnisses verringert werden. Es lassen sich folgende Fälle unterscheiden:
1. Bei CIN ≧ 10 dB - keine Umschaltung der Empfangsbandbreite
2. Bei 8 dB < CIN < 10 dB - Umschaltung der Empfangsbandbreite im Takt der Zeitintervalle des D2-MAC-Signals
3. Bei CIN ≦ 8 dB
   a) Verringerung der Bandbreite eines Eingangsfilters in Abhängigkeit des CIN-Verhältnisses bei gleicher Schleifenbandbreite wie unter 2.
   b) Verringerung der Bandbreite eines Eingangsfilters in Abhängigkeit des CIN-Verhältnisses bei gleichzeitiger Verringerung der Schleifenbandbreite des Demodulators.

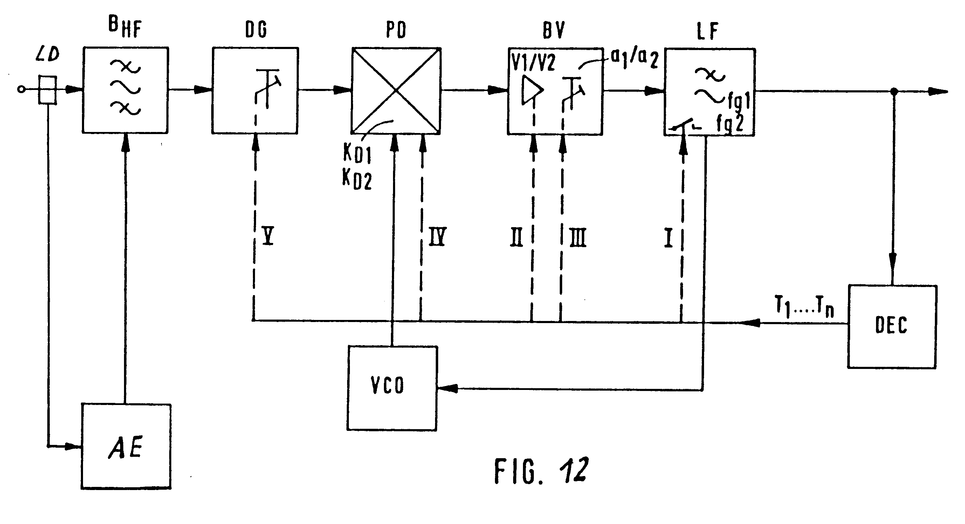

Für den Fall 3 a) läßt sich die Prinzipschaltung gemäß Fig. 12 verwenden. Mit einem Pegeldetektor LD vor dem eingangsseitigen Bandfilter B_{HF} wird der Nutzempfangspegel gemessen. In einer Auswerteeinrichtung AE werden hieraus Steuersignale zur kontinuierlichen oder gestuften Verringerung der Bandbreite des Bandfilters B_{HF} in Abhängigkeit des Nutzempfangspegels gebildet. Bei sinkendem Nutzempfangspegel wird die Durchlaßbandbreite des Bandfilters B_{HF} verringert. Die Grenze des Variationsbereiches wird dabei von der eingenommenen HF-Bandbreite des D2-Anteiles bestimmt - hier ≈13 MHz. Im MAC-Signal treten dabei Verzerrungen auf, die jedoch visuell weniger stören als die an der FM-Schwelle auftretenden Spikes. Das Kriterium zur Verringerung der Durchlaßbandbreite kann nicht nur vom Nutzempfangspegel sondern auch aus den folgenden gemessenen Parametern abgeleitet werden:
- SIN-Verhältnis in einem Außerbandkanal, beispielsweise oberhalb 8,4 MHz,
- Höhe der Rauschimpulsspitzen ("Impulsive-Noise"),
- SIN-Verhältnis einer Testzeile des MAC-Anteils, z.B. der Schwarz- oder Weißwert der 624. Zeile,
- Außertrittfallen der nachgeschalteten PLL -Schleife d.h. bei Außertrittfallen der PLL-Schleife wird das Bandfilter B_{HF} auf kleinste Durchlaßbereiche gesteuert.

Die Baugruppen und Wirkungslinien I bis V gemäß Fig. 3 können für den Fall 3 a) wie zuvor angewendet werden.

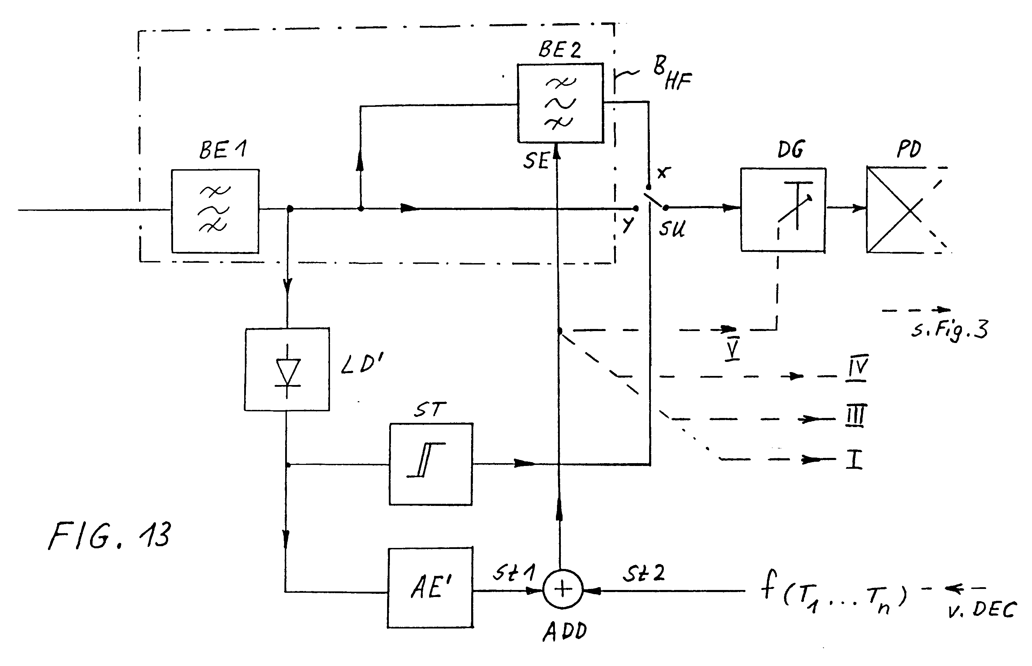

Für den Fall 3 b) eignet sich beispielsweise die Prinzipschaltung gemäß Fig. 13. Das eingangsseitige Bandfilter B_{HF} besteht hier aus zwei Teilfiltern BE1 und BE2. Das Teilfilter BE1 befindet sich immer im Signalweg. Es weist vorzugsweise eine feste Durchloßbandbreite auf, die der Bandbreite B2 ≈ 27 MHz entspricht. Das Teilfilter BE2, dessen Durchlaßbandbreite steuerbar ist, ist über den Umschalter SU in Kette zum Teilfilter BE1 in den Signalweg schaltbar. Die Steuerung des Umschalters SU erfolgt über einen der zuvor genannten gemessenen Parameter, wie Nutzempfangspegel, SIN-Verhältnis für Außerbandkanal, Rauschimpulsspitzen, SIN-Verhältnis einer Testzeile oder Außertrittfallen der PLL-Schleife. In Fig. 13 ist die Steuerung in Abhängigkeit des Nutzsignalpegels dargestellt. Über einen Nutzsignalpegeldetektor LD' und einen nachgeschalteten Schmitt-Trigger ST wird der Umschalter SU bei sehr kleinen Nutzempfangspegeln in Stellung x gebracht d.h. Durchlaßbandbreite zwischen 13 und 27 MHz. Bei einem Nutzsignalempfangspegel, der einem CIN-Verhältnis von > 8 dB entspricht, wird der Umschalter SU in Stellung y gebracht; d.h. Durchlaßbandbreite ≈ 27 MHz. Der mittels Detektor LD' gemessene Nutzempfangspegel wird der Auswerteeinheit AE' zugeführt, die ein Steuersignal St1 zur Verringerung der Bandbreite des Teilfilters BE2 bei zu geringem Nutzempfangspegel zur Verfügung stellt. Es wird jedoch nicht nur das Steuersignal St1 zur Verringerung der Bandbreite des Teilfilters BE2 herangezogen sondern auch ein vom Ausgangssignal des Dekoders DEC (Fig. 3) abgeleitetes Steuersignal St2. Beide Steuersignale St1 und St2 wirken über einen Addierer ADD auf den Steuereingang SE des Teilfilters BE2. Das aus St1 und St2 zusammengesetzte Steuersignal kann die Wirkungslinien I bis V zu den Baugruppen in Fig. 3 ersetzen. Die Wirkungslinien I bis V, die zu den jeweiligen Stellgliedern führen, müssen dann für eine nochmalige Reduzierung der Schleifenbandbreite in Schritten oder kontinuierlich einstellbar ausgelegt sein. Damit wird die Schleifenbandbreite der PLL-Schleife für alle Umschaltimpulszeiten T₁ ... Tₙ im gleichen Maße verringert wie die Durchlaßbandbreite des Teilfilters BE2.

Bei Inbetriebnahme des Demodulators oder bei fehlendem Schaltsignal ist es vorteilhaft, den Demodulator zuerst auf kleinste Empfangsbandbreite zu schalten.

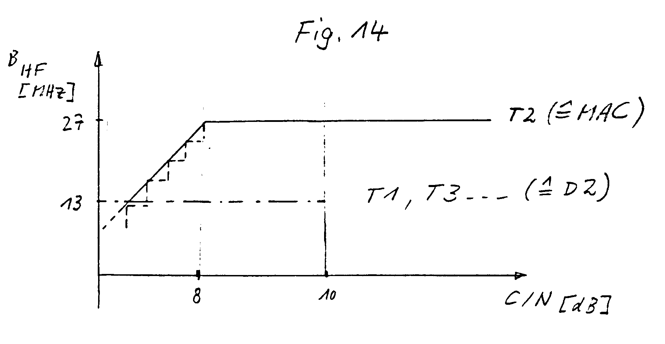

In Fig. 14 ist die HF-Bandbreitenumschaltung über CIN dargestellt gemäß den drei zuvor behandelten Fällen. Die Schleifenbandbreite kann entsprechend verändert werden, wobei die HF-Bandbreiten gemäß Fig. 14 um einen Faktor x<1 reduziert werden; d.h. im Bereich CIN ≦ 8 dB ändert sich die Schleifenbandbreite proportional zur Bandbreite B_{HF}.

## Patentansprüche

1. Verfahren zum Demodulieren von Zeitmultiplexsignalen mit digitalen Komponenten und analogen Komponenten in Form von FM-Signalen, mit Maßnahmen zur Verbesserung der Empfangsqualität bei der Demodulation durch Bandbreitenumschaltung, wobei sich die eingenommenen HF-Bandbreiten von analogen und digitalen Komponenten periodisch, entsprechend einem modulierenden Basisband-Zeitmultiplexsignal, ändern, wobei die Dauer der Zeitintervalle (T2) der analogen Komponenten innerhalb einer Periode verschieden ist von der Dauer der Zeitintervalle (T1) der digitalen Komponenten und wobei die Empfangsbandbreite beim Demodulieren jeweils im Takt der analogen und der digitalen Komponenten umgeschaltet wird, dadurch gekennzeichnet, daß für ein großes Signal/Rauschverhältnis C/N, wie zum Beispiel C/N ≧ 10 dB, keine Umschaltung der Empfangsbandbreite vorgenommen wird, daß für ein mittleres, zum Beispiel 8 dB < C/N < 10 dB, und kleines, zum Beispiel C/N ≦ 8 dB, C/N die Umschaltung der Empfangsbandbreite im Takt der beiden Zeitintervalle für die analogen und die digitalen Komponenten vorgenommen wird, daß die Empfangsbandbreite bei einem mittleren C/N auf einen Wert umgeschaltet wird, der ungefähr der HF-Bandbreite der Komponenten im jeweiligen Zeitintervall entspricht und daß die Empfangsbandbreite bei einem kleinen C/N in Abhängigkeit des gemessenen C/N noch weiter verringert wird.

2. Verfahren nach Anspruch 1, dadurch gekennzeichnet, daß zur Verringerung der Empfangsbandbreite ein Demodulator-Eingangsfilter (B_{HF}) in seiner Bandbreite verstellt wird und daß bei verringerter Bandbreite des Demodulator-Eingangsfilters (B_{HF}) die Schleifenbandbreite beim Demodulieren ebenfalls verringert wird.

3. Verfahren nach einem der Ansprüche 1 oder 2, dadurch gekennzeichnet, daß das Kriterium zur Verringerung der Bandbreite des Demodulator-Eingangsfilters (B_{HF}) / Schleifenbandbreite beim Demodulieren aus dem C/N Verhältnis in einem Außerbandkanal abgeleitet wird.

4. Verfahren nach einem der Ansprüche 1 bis 3, dadurch gekennzeichnet, daß das Kriterium zur Verringerung der Bandbreite des Demodulator-Eingangsfilters (B_{HF}) / Schleifenbandbreite beim Demodulieren aus dem gemessenen Nutzempfangspegel abgeleitet wird.

5. Verfahren nach einem der Ansprüche 1 bis 3, dadurch gekennzeichnet, daß das Kriterium zur Verringerung der Bandbreite des Demodulator-Eingangsfilters (B_{HF}) / Schleifenbandbreite beim Demodulieren aus der Messung von Rauschimpulsspitzen abgeleitet wird.

6. Verfahren nach einem der Ansprüche 1 bis 3, dadurch gekennzeichnet, daß das Kriterium zur Verringerung der Bandbreite des Demodulator-Eingangsfilters (B_{HF}) / Schleifenbandbreite beim Demodulieren aus der Messung des C/N-Verhältnisses einer Testzeile des Analog-Komponenten/ MAC-Anteils abgeleitet wird.

7. Anordnung zum Demodulieren von Zeitmultiplexsignalen mit digitalen Komponenten und analogen Komponenten in Form von FM-Signalen, wobei sich die eingenommenen HF-Bandbreiten von analogen und digitalen Komponenten periodisch, entsprechend einem modulierenden Basisband-Zeitmultiplexsignal, ändern und wobei die Dauer der Zeitintervalle (T2) der analogen Komponenten innerhalb einer Periode verschieden ist von der Dauer der Zeitintervalle (T1) der digitalen Komponenten, dadurch gekennzeichnet, daß zum Demodulieren ein PLL-Demodulator vorgesehen ist, dessen Schleifenbandbreite gesteuert über einen Dekoder (DEC), welcher aus dem Ausgangssignal des PLL-Demodulators die Zeitintervalle für die digitalen und analogen Komponenten des Basisband-Zeitmultiplexsignals generiert, im Takt dieser Zeitintervalle umgeschaltet wird, daß Mittel vorgesehen sind zum Umschalten der Empfangsbandbreite bei einem mittleren Signal/Rauschverhältnis C/N, zum Beispiel 8 dB < C/N < 10 dB, auf einen Wert, der ungefähr der HF-Bandbreite der Komponenten im jeweiligen Zeitintervall entspricht und daß weitere Mittel vorgesehen sind zur weiteren Verringerung der Empfangsbandbreite bei einem kleinen C/N, zum Beispiel C/N ≦ 8 dB, in Abhängigkeit des gemessenen C/N und daß bei einem großen C/N, wie zum Beispiel C/N ≧ 10 dB, keine Umschaltung der Empfangsbandbreite vorgenommen wird.

8. Anordnung zum Demodulieren von Zeitmultiplexsignalen mit digitalen Komponenten und analogen Komponenten in Form von FM-Signalen, wobei sich die eingenommenen HF-Bandbreiten von analogen und digitalen Komponenten periodisch, entsprechend einem modulierenden Basisband-Zeitmultiplexsignal, ändern und wobei die Dauer der Zeitintervalle (T2) der analogen Komponenten innerhalb einer Periode verschieden ist von der Dauer der Zeitintervalle (T1) der digitalen Komponenten, dadurch gekennzeichnet, daß zum Demodulieren ein FM-Gegenkopplungsdemodulator vorgesehen ist, dessen Schleifenverstärkung und Loopfilter gesteuert über einen Dekoder (DEC), welcher aus dem Ausgangssignals des FM-Gegenkopplungsdemodulators die Zeitintervalle für die digitalen und analogen Komponenten des Basisband-Zeitmultiplexsignals generiert, im Takt dieser Zeitintervalle umgeschaltet wird, daß Mittel vorgesehen sind zum Umschalten der Empfangsbandbreite bei einem mittleren Signal/Rauschverhältnis C/N, zum Beispiel 8 dB < C/N < 10 dB, auf einen Wert der ungefähr der HF-Bandbreite der Komponenten im jeweiligen Zeitintervall entspricht und daß weitere Mittel vorgesehen sind zur weiteren Verringerung der Empfangsbandbreite bei einem kleinen C/N, zum Beispiel C/N ≦ 8 dB, in Abhängigkeit des gemessenen C/N und daß bei einem großen C/N, wie zum Beispiel C/N ≧ 10 dB, keine Umschaltung der Empfangsbandbreite vorgenommen wird.

9. Anordnung zum Demodulieren von Zeitmultiplexsignalen mit digitalen Komponenten und analogen Komponenten in Form von FM-Signalen, wobei sich die eingenommenen HF-Bandbreiten von analogen und digitalen Komponenten periodisch, entsprechend einem modulierenden Basisband-Zeitmultiplexsignal, ändern und wobei die Dauer der Zeitintervalle (T2) der analogen Komponenten innerhalb einer Periode verschieden ist von der Dauer der Zeitintervalle (T1) der digitalen Komponenten, dadurch gekennzeichnet, daß zum Demodulieren ein Trackingfilter-Demodulator vorgesehen ist, dessen Schleifenverstärkung und Loopfilter gesteuert über einen Dekoder (DEC), welcher aus dem Ausgangssignal des Trackingfilter-Demodulators die Zeitintervalle für die digitalen und analogen Komponenten des Basisband-Zeitmultiplexsignals generiert, im Takt dieser Zeitintervalle umgeschaltet wird, daß Mittel vorgesehen sind zum Umschalten der Empfangsbandbreite bei einem mittleren Signal/Rauschverhältnis C/N, zum Beispiel 8 dB < C/N < 10 dB, auf einen Wert der ungefähr der HF-Bandbreite der Komponenten im jeweiligen Zeitintervall entspricht und daß weitere Mittel vorgesehen sind zur weiteren Verringerung der Empfangsbandbreite bei einem kleinen C/N, zum Beispiel C/N ≦ 8 dB, in Abhängigkeit des gemessenen C/N und daß bei einem großen C/N, wie zum Beispiel C/N ≧ 10 dB, keine Umschaltung der Empfangsbandbreite vorgenommen wird.

10. Anordnung nach einem der Ansprüche 7 bis 9, dadurch gekennzeichnet, daß dem Dekoder (DEC), welcher im Falle eines D2-MAC Zeitmultiplexsignals Zeilensynchron-Rahmenimpulse (S_{H}), Klemmimpulse (CL) sowie ein Taktsignal (CLK) liefert, folgende Baugruppen zugeordnet sind:
- ein Flip-Flop (FF), welches die Zeilensynchron-Rahmenimpulse (S_{H}) und die Klemmimpulse (CL) derart verknüpft, daß zu Beginn eines D2-Datensignals ein zu einer reduzierten Empfangsbandbreite gehöriges Steuersignal erzeugt wird und am Ende des D2-Datensignals ein zur nichtreduzierten Empfangsbandbreite gehöriges Steuersignal erzeugt wird.
- ein Verzögerungsglied (VZ), welches die Zeilensynchronrahmenimpulse (S_{H}) und das Taktsignal (CLK) so verzögert, daß die Schaltflanke eines Zeilensynchronrahmensimpulses (S_{H}) etwa um eine Periode des Taktsignals (CLK) vor dem ersten Bit des D2-Datensignals liegt.

11. Anordnung nach Anspruch 7 oder 10, dadurch gekennzeichnet, daß zur Umschaltung der Schleifenbandbreite das Loopfilter (LF) umgeschaltet wird.

12. Anordnung nach Anspruch 7 oder 10, dadurch gekennzeichnet, daß zur Änderung der Schleifenbandbreite die Basisband-Verstärkung (V1, V2) innerhalb der PLL-Schleife umgeschaltet wird.

13. Anordnung nach Anspruch 7 oder 10, dadurch gekennzeichnet, daß zur Änderung der Schleifenbandbreite die Steilheit des Phasendetektors (PD) der PLL-Schleife umgeschaltet wird.

14. Anordnung nach Anspruch 7 oder 10, dadurch gekennzeichnet, daß zur Umschaltung der Schleifenbandbreite die Basisband-Verstärkung (V1, V2) innerhalb der PLL-Schleife sowie das Loopfilter (LF) umgeschaltet wird.

15. Anordnung nach einem der Ansprüche 7 bis 10, dadurch gekennzeichnet, daß die Höhe der Amplitude des Demodulatoreingangssignals umgeschaltet wird.

16. Anordnung nach einem der Ansprüche 7 bis 10, dadurch gekennzeichnet, daß das Demodulator-Eingangsfilter (B_{HF}) in seiner Bandbreite im Takt der Zeitintervalle der analogen und digitalen Komponenten des Basisband-Zeitmultiplexsignals umgeschaltet wird.

## Claims

1. Method for the demodulation of time multiplex signals with digital components and analog components in the form of frequency-modulated signals with measures for improving the quality of reception during the demodulation by bandwidth-switching, wherein the high-frequency bandwidths taken up by analog and digital components periodically vary according to a modulating baseband time multiplex signal, wherein the duration of the time intervals (T2) of the analog components within a period is different from the duration of the time intervals (T1) of the digital components and wherein the reception bandwidth is switched over during demodulation each time in the rhythm of the analog and the digital components, characterised thereby, that no switching-over of the reception bandwidth is undertaken for a high signal-to-noise ratio C/N, such as for example C/N at least equal to 10 decibels, and that the switching over of the reception bandwidth is undertaken in the rhythm of both the time intervals for the analog and the digital components for a medium CN, for example between 8 and 10 decibels, and for a low C/N, for example at most equal to 8 decibels, that the reception bandwidth for a medium C/N is switched over to a value which corresponds approximately to the high-frequency bandwidth of the components in the respective time interval and that the reception bandwidth for a low C/N is reduced still further in dependence on the measured C/N.

2. Method according to claim 1, characterised thereby, that for reduction of the reception bandwidth, a demodulator input filter (B_{HF}) is reset in its bandwidth and that when the bandwidth of the demodulator input filter (B_{HF}) is reduced, the loop bandwidth during demodulating is likewise reduced.

3. Method according to one of the claims 1 and 2, characterised thereby, that the criterion for the reduction of the bandwidth of the demodulator input filter (B_{HF})loop bandwidth during demodulating is derived from the C/N ratio in an out-of-band channel.

4. Method according to one of the claims 1 to 3, characterised thereby, that the criterion for the reduction of the bandwidth of the demodulator input filter (B_{HF})/loop bandwidth during demodulating is derived from measured useful reception level.

5. Method according to one of the claims 1 to 3, characterised thereby, that the criterion for the reduction of the bandwidth of the demodulator input filter (B_{HF})/loop bandwidth during demodulating is derived from the measurement of noise pulse peaks.

6. Method according to one of the claims 1 to 3, characterised thereby, that the criterion for the reduction of the bandwidth of the demodulator input filter (B_{HF})/loop bandwidth during demodulating is derived from the measurement of the C/N ratio of a test line of the analog component/MAC component.

7. Arrangement for the demodulation of time multiplex signals with digital components and analog components in the form of frequency modulated signals, wherein the high-frequency bandwidths taken up by analog and digital components periodically vary according to a modulating baseband time multiplex signal and wherein the duration of the time intervals (T2) of the analog components within a period is different from the duration of the time intervals (T1) of the digital components, characterised thereby, that a PLL-demodulator is provided for demodulation and has a loop bandwidth switched over under the control of a decoder (DEC), which from the output signals of the PLL-demodulator generates the time intervals for the analog and the digital components of the baseband time multiplex signal, and is switched over in the rhythm of these time intervals and that means are provided for the switching-over of the reception bandwidth at a medium signal-to-noise ratio C/N, for example between 8 and 10 decibels, to a value which corresponds approximately to the high-frequency bandwidth of the components in the respective time interval and that further means are provided for further reduction of the reception bandwidth at a low C/N, for example at most equal to 8 decibels, in dependence on the measured C/N and that no switching-over of the reception bandwidth is undertaken for a high signal-to-noise ratio C/N, such as for example C/N at least equal to 10 decibels.

8. Arrangement for the demodulation of time multiplex signals with digital components and analog components in the form of frequency modulated signals, wherein the high-frequency bandwidths taken up by analog and digital components periodically vary according to a modulating baseband time multiplex signal and wherein the duration of the time intervals (T2) of the analog components within a period is different from the duration of the time intervals (T1) of the digital components, characterised thereby, that a frequency modulation feedback demodulator is provided for demodulation and has a loop amplification and loop filter switched over under the control of a decoder (DEC), which from the output signal of the frequency modulation feedback demodulator generates the time intervals for the digital and the analog components of the baseband time multiplex signal, and in the rhythm of these time intervals, that means are provided for the switching-over of the reception bandwidth at a medium signal-to-noise ratio C/N, for example between 8 and 10 decibels, to a value which corresponds approximately to the high-frequency bandwidth of the components in the respective time interval and that further means are provided for further reduction of the reception bandwidth at a low C/N, for example at most equal to 8 decibels, in dependence on the measured C/N and that no switching over of the reception bandwidth is undertaken for a high signal-to-noise ratio C/N, such as for example C/N at least equal to 10 decibels.

9. Arrangement for the demodulation of time multiplex signals with digital components and analog components in the form of frequency modulated signals, wherein the high-frequency bandwidths taken up by analog and digital components periodically vary according to a modulating baseband time multiplex signal and wherein the duration of the time intervals (T2) of the analog components within a period is different from the duration of the time intervals (T1) of the digital components, characterised thereby, that a tracking filter demodulator is provided for demodulation and has a loop amplification and loop filter switched over under the control of a decoder (DEC), which from the output signal of the tracking filter demodulator generates the time intervals for the digital and the analog components of the baseband time multiplex signal, and in the rhythm of these time intervals, that means are provided for the switching-over of the reception bandwidth at a medium signal-to-noise ratio C/N, for example between 8 and 10 decibels, to a value which corresponds approximately to the high-frequency bandwidth of the components in the respective time interval and that further means are provided for further reduction of the reception bandwidth at a low C/N, for example at most equal to 8 decibels, in dependence on the measured C/N and that no switching-over of the reception bandwidth is undertaken for a high signal-to-noise ratio C/N, such as for example C/N at least equal to 10 decibels.

10. Arrangement according to one of the claims 7 to 9, characterised thereby, that the decoder (DEC), which in the case of a D2-MAC time multiplex signal supplies line-synchronous frame pulses (S_{H}), clamping pulses (CL) as well as a timing signal (CLK), is associated with the following component groups:
- a flip-flop (FF), which interlinks the line-synchronous frame pulses (S_{H}) and the clamping pulses (CL) in such a manner that a control signal belonging to a reduced reception bandwidth is produced at the beginning of a D2 data signal and that a control signal belonging to a not reduced reception bandwidth is produced at the end of the D2 data signal and
- a delay member (VZ), which so delays the line-synchronous frame pulses (S_{H}) and the timing signal (CLK) that the switching edge of a line-synchronous frame pulse (S_{H}) lies about one period of the timing signal (CLK) before the first bit of the D2 data signal.

11. Arrangement according to claim 7 or 10, characterised thereby, that the loop filter (LF) is switched over for the switching-over of the loop bandwidth.

12. Arrangement according to claim 7 or 10, characterised thereby, that the baseband amplification (V1, V2) within the phase-locked loop is switched over for the changing of the loop bandwidth.

13. Arrangement according to claim 7 or 10, characterised thereby, that the slope of the phase detector (PD) of the phase-locked loop is switched over for the changing of the loop bandwidth.

14. Arrangement according to claim 7 or 10, characterised thereby, that the baseband amplification (V1, V2) within the phase-locked loop as well as the loop filter (LF) are switched over for the switching-over of the loop bandwidth.

15. Arrangement according to one of the claims 7 to 10, characterised thereby, that the height of the amplitude of the demodulator input signal is switched over.

16. Arrangement according to one of the claims 7 to 10, characterised thereby, that the demodulator input filter (B_{HF}) is switched over in its bandwidth in the rhythm of the time intervals of the analog and the digital components of the baseband time multiplex signal.

## Revendications

1. Procédé pour démoduler des signaux multiplexés dans le temps, comportant des composantes numériques et des composantes analogiques sous forme de signaux MF, avec des mesures pour améliorer la qualité de la réception dans la démodulation par commutation de la largeur de bande, dans lequel les largeurs de bande HF occupées par les composantes analogiques et numériques changent périodiquement, en conformité avec un signal modulant à multiplexage temporel en bande de base, dans lequel la durée des intervalles de temps (T2) des composantes analogiques à l'intérieur d'une période diffère de la durée des intervalles de temps (T1) des composantes numériques, et dans lequel la largeur de bande de réception à la démodulation est conmutée chaque fois à la cadence des composantes analogiques et numériques, caractérisé en ce que, pour un grand rapport signal/bruit C/N, comme par exemple C/N ≧ 10 dB, aucune commutation de la largeur de bande de réception n'est effectuée, que, pour un C/N moyen, par exemple 8 dB < C/N < 10 dB et un petit C/N, par exemple C/N ≦ 8 dB, la commutation de la largeur de bande de réception est effectuée à la cadence des deux intervalles de temps pour les composantes analogiques et les composantes numériques, que la largeur de bande de réception est commutée, dans le cas d'un C/N moyen, à une valeur correspondant approximativement à la largeur de bande HF des composantes dans l'intervalle de temps concerné, et que, pour un petit C/N, la largeur de bande de réception est réduite plus encore en fonction du C/N mesuré.

2. Procédé selon la revendication 1, caractérisé en ce que, pour réduire la largeur de bande de réception, un démodulateur-filtre d'entrée (B_{HF}) est ajusté dans sa largeur de bande et que, lorsque la largeur de bande du démodulateur-filtre d'entrée (B_{HF}) est réduite, la largeur de bande de la bouche à la démodulation est également réduite.

3. Procédé selon la revendication 1 ou 2, caractérisé en ce que le critère pour réduire la largeur de bande du démodulateur-filtre d'entrée (B_{HF}) / largeur de bande de la bouche à la démodulation, est tiré du rapport C/N dans un canal hors bande.

4. Procédé selon une des revendications 1 à 3, caractérisé en ce que le critère pour réduire la largeur de bande du démodulateur/filtre d'entrée (B_{HF}) / largeur de bande de la bouche à la démodulation, est tiré du niveau de réception utile mesuré.

5. Procédé selon une des revendications 1 à 3, caractérisé en ce que le critère pour réduire la largeur de bande du démodulateur-filtre d'entrée (B_{HF}) / largeur de bande de la bouche à la démodulation, est tiré de la mesure de pointes d'impulsions de bruit.

6. Procédé selon une des revendications 1 à 3, caractérisé en ce que le critère pour réduire la largeur de bande du démodulateur/filtre d'entrée (B_{HF}) / largeur de bande de la bouche à la démodulation, est tiré de la mesure du rapport C/N d'une ligne de test de la composante analogique/partie MAC.

7. Dispositif pour démoduler des signaux multiplexés dans le temps, comportant des composantes numériques et des composantes analogiques sous forme de signaux MF, dans lequel les largeurs de bande HF occupées par les composantes analogiques et numériques changent périodiquement, en conformité avec un signal modulant à multiplexage temporel en bande de base, et dans lequel la durée des intervalles de temps (T2) des composantes analogiques à l'intérieur d'une période diffère de la durée des intervalles de temps (T1) des composantes numériques, caractérisé en ce que, pour la démodulation, on a prévu un démodulateur PLL dont la largeur de bande de la boucle, sous la commande d'un décodeur (DEC) qui génère à partir du signal de sortie du démodulateur PLL les intervalles de temps pour les composantes numériques et analogiques du signal à multiplexage temporel dans la bande de base, est commutée à la cadence de ces intervalles de temps, que des moyens sont prévus pour commuter la largeur de bande de réception, lorsque le rapport signal/bruit C/N est moyen, par exemple 8 dB < C/N < 10 dB, à une valeur correspondant approximativement à la largeur de bande HF de la composante dans l'intervalle de temps concerné, que des moyens supplémentaires sont prévus pour réduire davantage la largeur de bande de réception lorsque C/N est petit, par exemple lorsque C/N ≦ 8 dB, en fonction du C/N mesuré, et que, dans le cas d'un grand C/N, comme par exemple C/N ≧ 10 dB, aucune commutation de la largeur de bande de réception n'est effectuée.

8. Dispositif pour démoduler des signaux multiplexés dans le temps, comportant des composantes numériques et des composantes analogiques sous forme de signaux MF, dans lequel les largeurs de bande HF occupées par les composantes analogiques et numériques changent périodiquement, en conformité avec un signal modulant à multiplexage temporel en bande de base, et dans lequel la durée des intervalles de temps (T2) des composantes analogiques à l'intérieur d'une période diffère de la durée des intervalles de temps (T1) des composantes numériques, caractérisé en ce que, pour la démodulation, on a prévu un démodulateur MF à contrecouplage dont l'amplification de boucle et le filtre de boucle, sous la commande d'un décodeur (DEC) qui génère à partir du signal de sortie du démodulateur MF à contre-couplage les intervalles de temps pour les composantes numériques et analogiques du signal à multiplexage temporel dans la bande de base, sont commutés à la cadence de ces intervalles de temps, que des moyens sont prévus pour commuter la largeur de bande de réception, lorsque le rapport signal/bruit C/N est moyen, par exemple 8 dB < C/N < 10 dB, à une valeur correspondant approximativement à la largeur de bande HF de la composante dans l'intervalle de temps concerné, que des moyens supplémentaires sont prévus pour réduire davantage la largeur de bande de réception lorsque C/N est petit, par exemple lorsque C/N ≦ 8 dB, en fonction du C/N mesuré, et que, dans le cas d'un grand C/N, comme par exemple C/N ≧ 10 dB, aucune commutation de la largeur de bande de réception n'est effectuée.

9. Dispositif pour démoduler des signaux multiplexés dans le temps, comportant des composantes numériques et des composantes analogiques sous forme de signaux MF, dans lequel les largeurs de bande HF occupées par les composantes analogiques et numériques changent périodiquement, en conformité avec un signal modulant à multiplexage temporel en bande de base, et dans lequel la durée des intervalles de temps (T2) des composantes analogiques à l'intérieur d'une période diffère de la durée des intervalles de temps (T1) des composantes numériques, caractérisé en ce que, pour la démodulation, on a prévu un démodulateur à filtre de poursuite dont l'amplification de la boucle et le filtre de boucle, sous la commande d'un décodeur (DEC) qui génère à partir du signal de sortie du démodulateur MF à contre-couplage les intervalles de temps pour les composantes numériques et analogiques du signal à multiplexage temporel dans la bande de base, sont commutés à la cadence de ces intervalles de temps, que des moyens sont prévus pour commuter la largeur de bande de réception, lorsque le rapport signal/bruit C/N est moyen, par exemple 8 dB < C/N < 10 dB, à une valeur correspondant approximativement à la largeur de bande HF de la composante dans l'intervalle de temps concerné, que des moyens supplémentaires sont prévus pour réduire davantage la largeur de bande de réception lorsque C/N est petit, par exemple lorsque C/N ≦ 8 dB, en fonction du C/N mesuré, et que, dans le cas d'un grand C/N, comme par exemple C/N ≧ 10 dB, aucune commutation de la largeur de bande de réception n'est effectuée.

10. Dispositif selon une des revendications 7 à 9, caractérisé par la coordination au décodeur (DEC), lequel fournit, dans le cas d'un signal à multiplexage temporel D2 MAC, des impulsions de trame de synchronisation de ligne (S_{H}), des impulsions de verrouillage (CL) ainsi qu'un signal d'horloge (CLK), des sousensembles suivants:
- une bascule (FF) qui combine les impulsions de trame de synchronisation de ligne (S_{H}) et les impulsions de verrouillage (CL) de manière qu'au début d'un signal de données D2, un signal de commande appartenant à une largeur de bande de réception réduite soit généré et que, à la fin du signal de données D2, un signal de commande appartenant à une largeur de bande de réception non réduite soit généré et
- un élément de retard (VZ) qui retarde les impulsions de trame de synchronisation de ligne (S_{H}) et le signal d'horloge (CLK) de manière que le flanc de commande d'une impulsion de trame de synchronisation de ligne (S_{H}) se trouve à environ une période du signal d'horloge (CLK) devant le premier bit du signal de données D2.

11. Dispositif selon la revendication 7 ou 10, caractérisé en ce que, pour la commutation de la largeur de bande de la boucle, le filtre de boucle (LF) est commuté.

12. Dispositif selon la revendication 7 ou 10, caractérisé en ce que, pour changer la largeur de bande de la boucle, l'amplification de bande de base (V1, V2) à l'intérieur de la boucle PLL est commutée.

13. Dispositif selon la revendication 7 ou 10, caractérisé en ce que, pour changer la largeur de bande de la boucle, la pente du détecteur de phase (PD) de la boucle PLL, est commutée.

14. Dispositif selon la revendication 7 ou 10, caractérisé en ce que, pour la commutation de la largeur de bande de la boucle, l'amplification de bande de base (V1, V2) à l'intérieur de la boucle PLL ainsi que le filtre de boucle (LF) sont commutés.

15. Dispositif selon une des revendications 7 à 10, caractérisé en ce que l'amplitude du signal d'entrée du démodulateur est commutée.

16. Dispositif selon une des revendications 7 à 10, caractérisé en ce que la largeur de bande du démodulateur-filtre d'entrée (B_{HF}) est commutée à la cadence des intervalles de temps des composantes analogiques et numériques du signal à multiplexage temporel dans la bande de base.
